# EUROPEAN PATENT SPECIFICATION

(11) **EP 2 207 918 B1**
(45) Date of publication and mention of the grant of the patent: **06.01.2016**
(21) Application number: 08842612.7
(22) Date of filing: 20.10.2008
(51) Int. Cl.: D01F 6/60, D02J 3/02, D21D 1/30, F16D 69/02

(54) **FIBRILLATED ARAMID FIBRES**
FIBRILLIERTE ARAMIDFASERN
FIBRES ARAMID FIBRILLÉS

(30) Priority: 23.10.2007 EP 07020678
(43) Date of publication of application: 21.07.2010
(73) Proprietor: Teijin Aramid GmbH, 42103 Wuppertal (DE)
(72) Inventor: SCHMITT, Michael Heinrich, 40822 Mettmann (DE); BOVENSCHEN, Soon Joo, NL-6812 DJ Arnhem (NL); TIECKEN, Jan-Cees, NL-6942 KK Didam (NL)
(74) Representative: Heimann, Anette
(86) International application number: PCT/EP2008/064130
(87) International publication number: WO 2009/053331

(56) References cited:
- WO-A-2005/059211
- WO-A-2007/121956

## Description

The present invention relates to fibrillated aramid fiber having a large average length, and high green strength and good filler retention value.

Pulp, such as polyparaphenylene terephthalamide (PPTA) pulp, may be prepared by so-called refining, comprising cutting fiber to obtain the desired fiber length accompanied by fibrillating the fiber to give it a rough or hairy appearance.

Currently, refining fiber requires a pretreatment of the fiber, wherein the (semi-) continuous fiber is precut to obtain individual fiber fragments of appropriate short size to enable preparing a liquid suspension. Processes for pulp refining are for example known from US 5,687,917 wherein a refiner-apparatus and method for producing refined pulp by exerting mechanical forces on pulp fibres have been described. The apparatus includes a member having a plurality of drainage conduits, each drainage conduit having inlet and outlet openings, respectively.

A method for refining yarn and sliver by feeding the yarn or sliver and a liquid into a refiner has been described by the present inventors earlier in WO 2007/121956. In this patent application wet yarn to a length of 1.61 mm and wet sliver to a length of 1.84 mm were described. The green strength was not measured for these directly refined fibers. Green values were only determined after having undergone a second regular refining step wherein these fibers were further comminuted.

During the refining process the fibers are fibrillated to obtain pulp or pulp-like material. Fibrillation is best performed on short fiber. The longer the fiber, the less fibrillation is possible. This may be a disadvantage for the fibrillated fiber when used in application where green strength (also called impact strength) is important and wherein at the same time also the ability to retain filler material is important. The higher the fiber is fibrillated the better it can retain filler material, and the longer the fiber the higher is the green (impact) strength. Unfortunately, it is not possible to obtain long fibers for optimum green strength value and at the same time high fibrillation for optimum filler retention.

The present invention provides long fibers and a method for obtaining these long fibers, which despite their relatively low fibrillation nevertheless possess high green strength value and commercially acceptable filler retention.

To this end the invention makes use of a novel method of making fibrillated fibers. Typically, fiber coming out of a fiber spinning process is wet. The cutting pretreatment requires that the fiber is dried, since cutting wet (never dried) fiber is not feasible because the knives will easily break. This is another disadvantage of the prior art, not only for economical reasons but also because it is well known that the product (pulp) properties improve by using "never dried" fiber as basic material. According to the known refining processes, after drying and cutting the precut fiber is suspended in a liquid and the resulting suspension is centrally fed into the refiner.

To address the needs of long fibers having both high green strength and acceptable filler retention, the present invention discloses a refined fiber having an average length of 2 to 4 millimeter, a filler retention value of at least 18%, and a green strength value of at least 1.8 mJ/mm².

This fiber has low fibrillation, but nevertheless fair filler retention value and extreme high green strength value and is obtained by a process for refining yarn or sliver having a length of at least 1 meter, comprising the step of feeding the preferably never dried yarn or sliver and a liquid into a refiner, which comprises refiner fillings having a body surrounding a central hole, and at least one inlet for the yarn or sliver. The yarn or sliver thus is not fed into the refiner in the form of a suspension of short yarn or sliver fragments.

Yarn or sliver used according to this invention encompasses yarn or sliver in the form of bundles of long polymeric filaments having the same length. Preferably the yarn is continuous yarn having a length of at least 1 m, but preferably much longer, such as at least 10 m, more preferably at least 100 m. The yarn may be twisted or untwisted yarn. In another embodiment according to the invention, the sliver is in the form of bundles of overlapping filaments having the same or different lengths, e.g. varying from about 30 to about 1000 mm. Such fiber is called sliver. Although the individual filaments may be much shorter, the sliver has a length of at least 1 m, preferably as at least 10 m, more preferably at least 100 m.

The yarn or sliver is aramid yarn or sliver, more preferably poly-paraphenylene terephthalamide (PPTA) yarn or sliver.

Yarn or sliver and liquid are fed together to the refiner in such a way to ensure that the yarn or sliver is guided as a thread into the refiner and to the surface of the refiner filling, and that a suspension of yarn or sliver fragments leaves the refiner at the outward side of the refiner, the suspension comprising suitably cut and fibrillated yarn or sliver fragments. The speed wherein the yarn or sliver is fed into the refiner typically will depend on the thickness of the yarn or sliver, and can easily be adjusted by the skilled man to obtain the required pulp material. The speed may be regulated by adjusting the speed of the rotating counter disc (rotor) of the refiner and/or, optionally, through the use of a feeding device, such as a pressed transport duo roll system.

The yarn or sliver may be centrally fed into the refiner. Care should be taken that the speed wherein yarn or sliver is fed into the refiner is such that adequate transport of the yarn or sliver occurs and unrefined yarn or sliver does not accumulate inside the refiner.

In a preferred embodiment, the yarn or sliver is eccentrically fed into the refiner. The term "eccentric" means that the inlet is not positioned at the center of the circular refiner, but at a certain distance there from. Eccentric feeding for instance can be done through an inlet that is positioned in a refiner filling. Such positioning of a yarn or sliver inlet in the refiner filling advantageously ensures a more easy transport of the yarn or sliver into the refiner and to the surface of the refiner filling and decreases the risk of yarn or sliver accumulation in the refiner.

In an especially preferred embodiment, the yarn or sliver is fed into a refiner through an inlet that is positioned in a refiner filling as is provided in a further aspect of the present method to have an inclined slope on the outflow side of the inlet, the inclined slope serving to guide the yarn or sliver from the inlet hole to the surface of the refiner filling. The liquid that is fed to the refiner may be any liquid that is suitable to facilitate transport of the yarn or sliver and/or to function as cooling liquid. The amount of liquid fed to the refiner depends among others on the dimensions of the equipment used. Typically, an amount of liquid is fed to the refiner that enables production of a yarn or sliver suspension of 0.1-10% (w/w). If the inlet hole for the yarn or sliver is not centrally positioned in the refiner, it is possible that part of the liquid is fed into the refiner using the inlet hole and part is centrally fed into the refiner. Preferably, the liquid fed to the refiner is water. In a further preferred embodiment the water is fed to the refiner using one or more water jets. These water jets are constructed to give a water stream in the direction of the refiner, and the jetted water has such speed that due to under pressure the water carries the yarn or sliver to the inlet of the refiner. This leads to a smooth transport of the yarn or sliver to the refiner. The water speed in the feeding direction therefore is at least as great as the feeding speed of the yarn or sliver but usually higher.

The invention advantageously allows freedom to add certain additives to the liquid that is fed into the refiner. Thus in an embodiment according to the invention, the liquid fed into the refiner comprises a finish. Finish typically is an oily material that may be applied as a processing aid and/or to improve functional properties of the refined pulp. Suitable compounds to be used as finish for instance are ethoxylated fatty acid esters, and mixtures of ethoxylated alcohol, propoxylated alcohol (alcohols such as butanol), and ethoxylated or propoxylated fatty alcohols. For instance, finish improves smoothness of the pulp and/or improves its isolating and/or antistatic properties. However, for applications wherein the content of finish should be low or wherein finish should preferably be absent, the present invention advantageously allows refining of yarn or sliver without adding any finish. For instance, a low or even zero level of finish is advantageous for pharmaceutical, food, and paper applications.

In another embodiment a neutralizing agent may be added as additive, for instance to neutralize acid residues that are present in aramid yarn or sliver as remainders from the manufacturing process. The liquid may also contain mixtures of additives.

The present invention provides a fiber obtained by the above process for the preparation of pulp. The suspension obtained by the process may be further processed to obtain a pulp or pulp-like material that can be used for various applications. Further processing may comprise dewatering and/or drying steps as known in the art.

Preferably, the fiber is never dried, but after their manufacture from never dried yarn or sliver, they may be dried before further use.

The above method allow the preparation of fiber having an average length of 2 to 4 mm, preferably 2 to 3 mm. possessing a green strength value of at least 1.8, preferably 1.8 to 3.5 mJ/mm². Such great strengths are never obtained for short strongly fibrillated fibers.

At the same time the fibers of the invention have a filler retention value higher than 18%. Such high values are only known for short fibrillated fibers.

In another embodiment, the fiber is obtained from yarn or sliver suspension obtained from the refining process which is fed to another refiner, i.e. is subjected to a regular refining step comprising feeding the yarn or sliver suspension to said other (regular) refiner.

In still a further aspect, the present fibers are obtained by a method using a refiner filling comprising a body surrounding a central hole, the body comprising the active refining surface and bolt holes for mounting the refiner filling in the refiner, characterized in that the body further comprises at least one inlet for feeding yarn or sliver into the refiner. The central hole may be used for pulp to enter the refiner. In some arrangements, it is also possible that pulp leaves the refiner through the central hole. The inlet for feeding yarn or sliver preferably has a diameter and form, and a position in the refiner filling, suitable to guide the yarn or sliver into the refiner and to the active surface of the refiner filling and to ensure that the pulp that leaves the refiner is suitably cut and fibrillated.

The refiner filling may comprise one or a multitude of yarn or sliver inlets, such as 1 to 5 inlets, or more.

The inlet may be positioned in the body of the refiner filling at any position that ensures suitable processing of the yarn or sliver to pulp. The positioning of the yarn or sliver inlet may depend on the positioning of the pulp outlet. For instance, if pulp leaves the refiner at the downward side, the position of the yarn or sliver inlet may be closer to the inside edge than to the outside edge of the refiner filling, to allow a proper contact of the yarn or sliver with the surface-located blades of the refiner filling.

The filling having the yarn or sliver inlet may comprise an inlet hole and an inclined slope on the outflow side of the inlet at the active surface of the refiner filling. The inclined slope is made in such a way that it serves to guide the yarn or sliver from the inlet hole to the surface-located blades of the refiner filling.

The above refining process results in relatively low fibrillated pulp with improved properties and improved performance in various applications, particularly for applications wherein both high green strength and good filler retention value are important. For instance, the fiber can be suitable used for making friction materials, gaskets, braking pads and linings wherein the pulp-like fibers of the invention are applied in the conventional manners for making these products.

The invention is further illustrated by the following non-limitative examples.

### Equipment

. 12" Sprout Waldron Single Disc Laboratory Refiner (12^{u} ≡ 30.5 cm)
. Power: 50 kW
. Operating power 5-25 kW
. 1500 RPM
. Filler pattern Andritz D2A504 like
. Diameter inlet hole in stator disc: 11 mm
. Length of inlet hole 25 mm, width from 11 (beginning of slot at hole) to 22 mm (end of slot) and an angle of about 15°.

### General process conditions

. Central water flow: 100 L/min
. Eccentric water flow (goes together with the yarn or sliver to inlet hole): 0.1-1.0 L/min.
. Water temperature: 20 °C.

### Test methods

. Yarn or sliver length measurement
. Yarn or sliver length measurement was done using the Pulp Expert™ FS. As length the length weighted length (LL) was used. The subscript 0.25 means the respective value for particles with a length >250 micron. This instrument was calibrated with samples of yarn or sliver with known length.

### SR (EN ISO 5267-1:2000)

2 g (dry weight) of never dried pulp yarn or slivers were dispersed in 1 L water during 250 beats in a Lorentz and Wettre desintegrator. A well-opened sample is obtained. The Schopper Riegler (SR) value is measured. (EN ISO 5267-1:2000).

### Specific surface area (SSA) determination

Specific surface area (m²/g) was determined using adsorption of nitrogen by the BET specific surface area method, using a Tristar 3000 manufactured by Micromeretics. The dry pulp yarn or slivers samples were dried at 200 °C for 30 minutes, under flushing with nitrogen.

### Filler retention

A mixture of 97% Kaolin (Laude SP 20) and 3% Twaron® pulp was prepared on a high-speed vertical mixer. 20 g of the mixture were sieved on a riddle sifter device using a 250 mesh sieve. The remaining material on the sieve given as percentage of the initial amount was determined.

### Green strength

A mixture of 97% Kaolin (Laude SP 20) and 3% Twaron® pulp was prepared on a high-speed vertical mixer. 10 g of the mixture were molded at 70 bar to a rod with a thickness between 7.5 and 11.0 mm and a width of 15 mm. The rod was fractured on a pendulum ram impact testing device perpendicular to its main axis. The green strength is given as mJ/mm².

This example describes experiments with different refiner fillings with yarn of different moisture contents. The conditions and results of the refining according to the invention are shown in Table 1.

**Table 1**

| Exp. No. | Filler retention value | Green strength | Specific Surface Area | Yarn or sliver length | Schopper Riegler |
|---|---|---|---|---|---|
| | % | mJ/mm² | SSA (m²/g) | LL_{0.25} (mm) | SR (°) |
| 1 | 22.6 | 2.35 | 1.17 | 2.28 | 16.5 |
| A | 80.8 | 1.33 | 10.0 | 0.8 | 47.3 |
| B | 30.0 | 1.09 | 6.5 | 1.0 | 18.5 |
| C | 12.1 | 1.59 | 0.13 | 3.0 | 12.5 |

Example 1 is according to the invention. This shows good filler retention values and high green strength values. Note that the low SR and SSA values indicate the low degree of fibrillation of these samples.

### Examples A-C are comparison examples.

Example A is commercially available Twaron® 3091. These are highly fibrillated short fibers having a very good filler retention value, but a relatively poor green strength.

Example B is commercially available Twaron® 1095. These are medium fibrillated short fibers having a good filler retention value, but a poor green strength.

Example C is a cut non-fibrillated yarn of a length 3.0 mm. This sample has improved green strength in comparison with the short fibers of Examples A and B but a low filler retention value.

## Claims

1. A fibrillated aramid fiber having a length weighted length LL_{0.25} of 2 to 4 millimeter, a filler retention value of at least 18%, and a green strength value of at least 1.8 mJ/mm².

2. The fiber of claim 1 obtainable by a process wherein never dried yarn or sliver having a length of at least 1 meter is refined, by at least the step of feeding the yarn or sliver and a liquid into a refiner, which comprises refiner fillings having a body surrounding a central hole, and at least one inlet for the yarn or sliver.

3. The fiber of claim 1 or 2 wherein the fiber is never dried.

4. The fiber of claim 1 or 2 wherein the green strength value is 1.8 to 3.5 mJ/mm².

5. The fiber of any one of claims 1 to 4 wherein the fiber is PPTA fiber.

6. Use of the fiber of any one of claims 1-5 in friction materials, gaskets, brake pads, or brake linings.

7. Friction plates, brake pads, or brake linings comprising the fiber of any one of claims 1-5.

## Patentansprüche

1. Fibrillierte Aramidfaser mit einer längengewichteten Länge LL_{0,25} von 2 bis 4 Millimeter, einem Füllstoffrückhaltevermögen von mindestens 18 % und einer Grünfestigkeit von mindestens 1,8 mJ/mm².

2. Faser nach Anspruch 1, herstellbar durch ein Verfahren, bei dem nie getrocknetes Garn oder Faserband mit einer Länge von mindestens 1 Meter mindestens durch den Schritt der Zuführung des Garns oder Faserbands und einer Flüssigkeit in einen Refiner verfeinert wird, der Refinergarnituren mit einem ein zentrales Loch umschließenden Körper aufweist und mindestens einen Einlass für das Garn oder Faserband.

3. Faser nach Anspruch 1 oder 2, wobei die Faser nie getrocknet ist.

4. Faser nach Anspruch 1 oder 2, wobei die Grünfestigkeit 1,8 bis 3,5 mJ/mm² beträgt.

5. Faser nach einem der Ansprüche 1 bis 4, wobei die Faser eine PPTA-Faser ist.

6. Verwenden der Faser nach einem der Ansprüche 1-5 in Reibmaterialien, Dichtungen oder Bremsbelägen für Scheiben- und Trommelbremsen.

7. Bremsscheiben oder Bremsbeläge für Scheiben- und Trommelbremsen, die die Faser nach einem der Ansprüche 1-5 umfassen.

## Revendications

1. Fibre d'aramide fibrillée, ayant une longueur LL_{0,25} de 2 à 4 millimètres pondérée selon la longueur, une valeur de rétention de charge d'au moins 18 % et une valeur de résistance à l'état cru d'au moins 1,8 mJ/mm².

2. Fibre selon la revendication 1, réalisable par un procédé dans lequel un fil ou un brin jamais séché d'une longueur d'au moins 1 mètre est raffiné, au moins par l'opération consistant à introduire le fil ou le brin et un liquide dans un raffineur, lequel comprend des garnitures de raffineur ayant un corps entourant un trou central, et au moins une entrée pour le fil ou le brin.

3. Fibre selon la revendication 1 ou 2, dans lequel la fibre n'est jamais séché.

4. Fibre selon la revendication 1 ou 2, dans laquelle la valeur de résistance à l'état cru est de 1,8 à 3,5 mJ/mm².

5. Fibre selon l'une quelconque des revendications 1 à 4, dans laquelle la fibre est une fibre de PPTA.

6. Utilisation de la fibre selon l'une quelconque des revendications 1 à 5 dans des matériaux soumis à des frottements, des joints, des plaquettes de freins ou des garnitures de freins.

7. Disques de friction, plaquettes de freins ou garnitures de freins comportant la fibre selon l'une quelconque des revendications 1 à 5.
